# EUROPÄISCHE PATENTSCHRIFT

(11) **EP 2 324 334 B1**
(45) Veröffentlichungstag und Bekanntmachung des Hinweises auf die Patenterteilung: **25.02.2015**
(21) Anmeldenummer: 09782061.7
(22) Anmeldetag: 21.08.2009
(51) Int. Cl.: G01N 3/12

(54) **PRÜFKÖRPER SOWIE VERFAHREN ZUR UNTERSUCHUNG VON STOFFEIGENSCHAFTEN**
TEST BODY AND METHOD FOR INVESTIGATING MATERIAL PROPERTIES
ÉPROUVETTE ET PROCÉDÉ POUR L ANALYSE DES PROPRIÉTÉS D UN MATÉRIAU

(30) Priorität: 29.08.2008 EP 08163234
(43) Veröffentlichungstag der Anmeldung: 25.05.2011
(73) Patentinhaber: BASF SE, 67056 Ludwigshafen (DE)
(72) Erfinder: KRAFT, Werner Wilhelm, 67661 Kaiserslautern (DE); BERINGER, Kai, 67227 Frankenthal (DE); KURIYKOV, Yordan Vasilev, 68159 Mannheim (DE)
(86) Internationale Anmeldenummer: PCT/EP2009/060809
(87) Internationale Veröffentlichungsnummer: WO 2010/023158

(56) Entgegenhaltungen:
- DE-A1- 19 616 137
- DE-A1-102005 054 331
- JP-A- 57 197 437
- JP-A- 58 211 620
- JP-A- 60 187 842
- US-A- 5 001 935
- US-A- 5 123 679

## Beschreibung

Die Erfindung betrifft einen Prüfkörper, insbesondere einen Prüfkörper aus einem Polymermaterial, zur Untersuchung der Stoffeigenschaften für eine Bauteilauslegung, umfassend einen Hohlkörper, der einseitig mit einem gewölbten Boden verschlossen ist und an der dem Boden gegenüberliegenden Seite mit einem Deckel oder einem zweiten Prüfkörper verschließbar ist und einen Anschluss umfasst, der mit einer Druck- und/oder Medienleitung verbindbar ist. Weiterhin betrifft die Erfindung ein Verfahren zur Untersuchung der Stoffeigenschaften von Polymeren unter Verwendung eines solchen Prüfkörpers.

Um Auslegungskriterien für Bauteile zu erhalten, werden Prüfkörper unterschiedlichster Bauart eingesetzt. Zur Untersuchung der Zugfestigkeit von Polymeren ist es z.B. üblich, Zugstäbe einzusetzen. Jedoch können die mit Zugstäben gewonnenen Informationen nicht auf alle Belastungsarten eingesetzt werden. So ist es z.B. auch gebräuchlich, Hohlkörper einzusetzen, die mit Druck beaufschlagt werden. Die Druckbeaufschlagung kann beispielsweise oszillatorisch oder alternativ auch statisch erfolgen. Mit den entsprechenden Prüfkörpern kann einerseits untersucht werden, nach welcher Zeitdauer unter Belastung mit einem konstanten Druck ein Versagen auftritt oder wie hoch ein aufzubringender Druck ist, den der Prüfkörper aushält bis zum Versagen. Üblicherweise werden als Prüfkörper zylinderförmige Hohlkörper eingesetzt, die beidseitig durch einen Boden verschlossen sind und einen Anschluss aufweisen, der mit einer Druckleitung verbunden werden kann. Über die Druckleitung wird beispielsweise unter Druck stehende Luft in den Hohlkörper eingebracht.

Nachteil der eingesetzten Prüfkörper ist jedoch, dass sich der Ort des Versagens nicht vorhersagen lässt. Insbesondere, wenn das Versagen auch optisch erfasst werden soll, ist es so erforderlich, Bilder des Prüfkörpers von allen Seiten aufzunehmen, wozu insbesondere zur Untersuchung von Bruchmechanismen mehrere Hochgeschwindigkeitskameras erforderlich sind.

Ein weiterer wichtiger Einsatz von Prüfkörpern ist auch die Verifizierung von mathematischen Modellen zur Bauteilauslegung. Da derartige mathematische Modelle derzeit im Allgemeinen nicht hinreichend verifizierbar sind, ist es notwendig zur Bauteilauslegung Versuche durchzuführen, deren Versuchsdauer häufig bei mehr als 10 000 Stunden liegt, um eine verlässliche Aussage über die Stabilität des eingesetzten Werkstoffs zu erhalten.

Aufgabe der vorliegenden Erfindung ist es, einen Prüfkörper bereitzustellen, der es ermöglicht, Versuche zur Bauteilauslegung mit kürzeren Versuchszeiten durchzuführen und der es ermöglicht, eine verlässliche Aussage über die Stabilität des Werkstoffs zu liefern.

Gelöst wird die Aufgabe durch einen Prüfkörper aus einem Polymermaterial zur Untersuchung der Stoffeigenschaften für eine Bauteilauslegung, umfassend einen Hohlkörper, der einseitig mit einem gewölbten Boden verschlossen ist und an der dem Boden gegenüberliegenden Seite mit einem Deckel oder einem zweiten Prüfkörper verschließbar ist sowie einen Anschluss umfasst, der mit einer Druck- und/oder Medienleitung verbindbar ist. Der Hohlkörper ist im Wesentlichen zylinderförmig aufgebaut und weist an einer Seite eine Abflachung auf.

Vorteil des im Wesentlichen zylinderförmigen Aufbaus des Hohlkörpers, der an einer Seite die Abflachung aufweist ist, dass außerhalb der Abflachung eine gleichmäßige Spannungsverteilung erzielt wird. Durch die gleichmäßige Spannungsverteilung außerhalb der Abflachung werden keine Schwachstellen im Hohlkörper erzeugt, so dass die Abflachung eine gezielte Schwachstelle darstellt.

Aufgrund der gezielten Schwächung des Hohlkörpers durch die Abflachung erfolgt ein Versagen im Bereich der Abflachung. Insbesondere bei optischen Untersuchungen ist es somit nur noch erforderlich, die Seite der Abflachung zu betrachten.

Der Werkstoff, aus dem der Prüfkörper gefertigt wird, ist der zu untersuchende Werkstoff. Insbesondere eignet sich der Prüfkörper zur Untersuchung der Stoffeigenschaften von Polymermaterialien, so dass der Werkstoff, aus dem der Prüfkörper gefertigt ist, ein Polymermaterial ist. Das Polymermaterial kann dabei ein Thermoplast oder ein Duroplast sein. Diese können gefüllt oder ungefüllt eingesetzt werden.

Als Polymere eignen sich zum Beispiel natürliche und synthetische Polymere oder deren Derivate, Naturharze sowie synthetische Harze und deren Derivate, Proteine, Cellulose-Derivate und dergleichen. Diese können - müssen jedoch nicht - chemisch oder physikalisch härtend, beispielsweise luftaushärtend, strahlungshärtend oder temperaturhärtend, sein.

Neben Homopolymeren können auch Copolymere oder Polymergemische eingesetzt werden.

Üblicherweise eingesetzte Polymere sind zum Beispiel ABS (Acrylnitril-Butadien-Styrol); ASA (Acrylnitril-Styrol-Acrylat); acrylierte Acrylate; Alkydharze; Alkylenvinylacetate; Alkylenvinylacetat-Copolymere, insbesondere Methylenvinylacetat, Ethylenvinylacetat, Butylenvinylacetat; Alkylenvinylchlorid-Copolymere; Aminoharze; Aldehyd- und Ketonharze; Cellulose und Cellulose-Derivate, insbesondere Hydroxyalkylcellulose, Celluloseester, wie -acetate, -propionate, -butyrate, Carboxyalkylcellulosen, Cellulosenitrate; Epoxyacrylate; Epoxidharze; modifizierte Epoxidharze, zum Beispiel bifunktionelle oder polyfunktionelle Bisphenol-A- oder Bisphenol-F-Harze, Epoxy-Novolak-Harze, bromierte Epoxidharze, cycloaliphatische Epoxidharze; aliphatische Epoxidharze, Glycidether, Vinylether, Ethylenacrylsäurecopolymere; Kohlenwasserstoffharze; MABS (transparentes ABS mit Acrylat-Einheiten enthaltend); Melaminharze; Maleinsäureanhydridcopolymerisate; (Meth)acrylate; Naturharze; Kolophoniumharze; Schellack; Phenolharze; Polyester; Polyesterharze, wie Phenylesterharze; Polysulfone (PSU); Polyethersulfone (PESU); Polyphenylensulfon (PPSU); Polyamide; Polyimide; Polyaniline; Polypyrrole; Polybutylentherephtalat (PBT); Polycarbonate (zum Beispiel Makrolon^{®} der Bayer AG); Polyesteracrylate; Polyetheracrylate; Polyethylen; Polyethylenthiophene; Polyethylennaphthalate; Polyethylentherephtalate (PET); Polyethylenterephthalat-Glycol (PETG); Polypropylen; Polymethylmethacrylat (PMMA); Polyphenylenoxid (PPO); Polyoxymethylen (POM); Polystyrole (PS); Polytetrafluorethylen (PTFE); Polytetrahydrofuran; Polyether (zum Beispiel Polyethylenglycol, Polypropylenglycol); Polyvinyl-Verbindungen, insbesondere Polyvinylchlorid (PVC), PVC-Copolymere, PVdC, Polyvinylacetat sowie deren Copolymere, gegebenenfalls teilhydrolisierter Polyvinylalkohol, Polyvinylacetale, Polyvinylacetate, Polyvinylpyrrolidon, Polyvinylether, Polyvinylacrylate und -methacrylate in Lösung und als Dispersion sowie deren Copolymere, Polyacrylsäureester und Polystyrolcopolymere; Polystyrol (schlagfest oder nicht schlagfest modifiziert); Polyurethane, unvernetzte bzw. mit Isocyanaten vernetzt; Polyurethanacrylate; Styrol-Acrylnitril (SAN); Styrol-AcrylCopolymere; Styrol-Butadien-Blockcopolymere (zum Beispiel Styroflex^{®} oder Styrolux^{®} der BASF SE, K-Resin^{™} der TPC); Proteine, zum Beispiel Casein; SIS; Triazin-Harz, Bismaleimid-Triazin-Harz (BT), Cyanatester-Harz (CE), allylierter Polyphenylen-Ether (APPE). Weiterhin können Mischungen zweier oder mehrerer Polymere eingesetzt werden.

Vorzugsweise eignet sich der Prüfkörper zur Untersuchung von Acrylaten, Acrylatharzen, Cellulose-Derivaten, Methacrylaten, Methacrylatharzen, Melamin- und Aminoharzen, Polyalkylenen, Polyimiden, Epoxidharzen, modifizierten Epoxidharzen, zum Beispiel bifunktionellen oder polyfunktionellen Bisphenol-A- oder Bisphenol-F-Harzen, Epoxy-Novolak-Harzen, bromierten Epoxid-Harzen, cycloaliphatischen Epoxid-Harzen, aliphatischen Epoxid-Harzen, Glycidethern, Cyanatestern, Vinylethern, Phenolharzen, Polyimiden, Melaminharzen und Aminoharzen, Polyurethanen, Polyestern, Polyvinylacetalen, Polyvinylacetaten, Polystyrolen, Polystyrol-Copolymeren, Polystyrolacrylaten, Styrol-Butadien-Blockcopolymeren, Styrol-Acrylnitril-Copolymeren, Acrylnitril-Butadien-Styrol, Acrylnitril-Styrol-Acrylat, Polyoxymethylen, Polysulfonen, Polyethersulfonen, Polyphenylensulfon, Polybutylenterephthalat, Polycarbonaten, Alkylenvinylacetaten und Vinylchlorid-Copolymeren, Polyamiden, Cellulose-Derivaten sowie deren Copolymeren und Mischungen zweier oder mehrerer dieser Polymere.

Insbesondere eignet sich der Prüfkörper zur Untersuchung von Polyamiden, beispielsweise Polyamid 46, Polyamid 6, Polyamid 11, Polyamid 66, Polyamid 6/6, Polyamid 6/10 oder Polyamid 6/12, Polypropylen, Polyethylen, Styrol-Acrylnitril-Copolymeren, Acrylnitril-Butadien-Styrol, Acrylnitril-Styrol-Acrylat, Polyoxymethylen, Polysulfonen, Polyethersulfonen, Polyphenylensulfonen, Polybutylenterephthalat, Polycarbonaten sowie deren Mischungen.

Das Polymermaterial kann weiterhin verstärkt sein. Üblicherweise ist das Polymermaterial in diesem Fall faserverstärkt. Zur Verstärkung kann jede beliebige, dem Fachmann bekannte, zur Verstärkung übliche Faser verwendet werden. Geeignete Fasern sind z.B. Glasfasern, Kohlenstofffasern, Aramidfasern, Borfasern, Metallfasern oder Kaliumtitanatfasern. Die Fasern können in Form von Kurzfasern oder Langfasern eingesetzt werden. Auch können die Fasern geordnet oder ungeordnet im Polymermaterial enthalten sein. Insbesondere bei Einsatz von Langfasern ist jedoch eine geordnete Anordnung üblich. Die Fasern können dabei zum Beispiel in Form von Einzelfasern, Fasersträngen, Matten, Geweben, Gestricken oder Rovings eingesetzt werden. Wenn die Fasern in Form von Langfasern, als Rovings oder als Fasermatte eingesetzt werden, so werden die Fasern üblicherweise in eine Form eingelegt und anschließend mit dem Polymermaterial umgossen. Die so hergestellte Struktur kann einlagig oder mehrlagig aufgebaut sein. Bei einem mehrlagigen Aufbau können die Fasern der einzelnen Lagen jeweils gleichgerichtet sein oder die Fasern der einzelnen Lagen sind in einem Winkel von -90° bis +90° zueinander verdreht.

Bevorzugt werden jedoch Kurzfasern eingesetzt. Bei Einsatz von Kurzfasern werden diese üblicherweise der Polymermasse vor dem Aushärten zugemischt. Der Prüfkörper kann dabei z.B. durch Spritzgießen oder Gießen gefertigt werden. Bei Verwendung eines Thermoplasten wird der Prüfkörper vorzugsweise durch Spritzgießen hergestellt, bei Verwendung eines Duroplasten durch Gießen. Die Kurzfasern sind im Allgemeinen in der Struktur ungerichtet enthalten. Wenn die Struktur jedoch durch ein Spritzgussverfahren hergestellt wird, kann sich eine Ausrichtung der Kurzfasern durch das Pressen der die Fasern enthaltenden Polymermasse durch eine Einspritzdüse in das Werkzeug ergeben.

Als Verstärkungsmittel eignen sich neben Fasern auch beliebige andere Füllstoffe, die dem Fachmann bekannt sind und die steifigkeits- und/oder festigkeitserhöhend wirken. Hierzu zählen unter anderem auch beliebige Partikel ohne Vorzugsrichtung. Derartige Partikel sind im Allgemeinen kugelförmig, plättchenförmig oder zylindrisch. Die tatsächliche Form der Partikel kann dabei von der idealisierten Form abweichen. So können insbesondere kugelförmige Partikel in der Realität z.B. auch tropfenförmig oder abgeflacht sein.

Neben Fasern eingesetzte Verstärkungsmaterialien sind z.B. Graphit, Kreide, Talkum und nanoskalige Füllstoffe.

In einer bevorzugten Ausführungsform ist der Anschluss, der mit der Druck- und/oder Medienleitung verbindbar ist, am gewölbten Boden des Prüfkörpers angeordnet. Durch den Anschluss einer Druck- und/oder Medienleitung an den Anschluss am Prüfkörper lässt sich der Innenraum des Prüfkörpers mit einem Medium befüllen, um z.B. die Beständigkeit gegenüber diesem Medium zu untersuchen. Zudem kann der Innenraum des Prüfkörpers mit Druck beaufschlagt werden. Besonders bevorzugt ist der Anschluss, der mit der Druck- und/oder Medienleitung verbindbar ist, der entlang einer zentralen Achse des im Wesentlichen zylinderförmig aufgebauten Hohlkörpers angeordnet. Bei Herstellung des Prüfkörpers durch ein Spritzgussverfahren ist es weiterhin bevorzugt, wenn der Anschluss, der mit der Druck- und/oder Medienleitung verbindbar ist, auch den Angusspunkt des Prüfkörpers bildet. Es ist jedoch auch möglich, den Angusspunkt nicht am Anschluss, der mit der Druck- und/oder Medienleitung verbindbar ist, vorzusehen, sondern an einer beliebigen anderen Position des Prüfkörpers.

Vorteil der Anordnung des Anschlusses, der mit der Druck- und/oder Medienleitung verbindbar ist, entlang einer zentralen Achse des im Wesentlichen zylinderförmig aufgebauten Hohlkörpers ist, dass insbesondere eine Druckbelastung des Prüfkörpers gleichmäßig erfolgt. Insbesondere wenn der Prüfkörper von einem Medium durchströmt wird, lässt sich auf diese Weise eine gleichmäßige Strömung im Inneren des Prüfkörpers erzielen.

Um den Prüfkörper zu verschließen, damit der Innenraum mit Druck oder einem Medium beaufschlagt werden kann, ist vorzugsweise am Hohlkörper auf der dem gewölbten Boden gegenüberliegenden Seite ein Flansch oder eine Schweißkante ausgebildet. Am Flansch oder an der Schweißkante lässt sich so z.B. ein Deckel oder ein zweiter Prüfkörper anbringen. Die Verbindung des Deckels oder des zweiten Prüfkörpers erfolgt z.B. durch übliche, den Fachmann bekannte Flanschverbindungen wie Schrauben oder Klemmen. Alternativ ist es auch möglich, den Deckel oder den zweiten Prüfkörper z.B. anzuschweißen. Insbesondere beim Anschweißen eines zweiten Prüfkörpers oder des Deckels lässt sich so z.B. auch der Einfluss der Schweißnaht auf die Stabilität des Werkstoffs ermitteln.

Um zu vermeiden, dass z.B. durch Kanten und Ecken zusätzliche Schwachpunkte im Prüfkörper erzeugt werden, ist es bevorzugt, wenn alle Übergänge zur Abflachung mit einem Radius ausgebildet sind und keine Kanten aufweisen. In diesem Fall stellt die Abflachung die Schwachstelle des Prüfkörpers dar, an der mit einem Versagen zu rechnen ist. Zudem wird durch die Vermeidung von Ecken und Kanten das Auftreten von Spannungen im Prüfkörper reduziert.

Bei Herstellung des Prüfkörpers aus einem Polymermaterial ist es bevorzugt, dass der Prüfkörper eine Wanddicke aufweist, die einem üblicherweise aus dem Polymermaterial gefertigten Bauteil entspricht. Im Allgemeinen liegt die Wanddicke bei weniger als 5 mm, insbesondere bei weniger als 4 mm. Besonders bevorzugt ist es weiterhin, wenn die Abflachung eine geringere Wanddicke aufweist als die übrigen Wandungen des Prüfkörpers. So ist es z.B. bevorzugt, wenn die Wanddicke der Abflachung maximal 3,5 mm, insbesondere maximal 2,5 mm beträgt.

Um im Prüfkörper abgesehen von der Abflachung eine gleichmäßige Spannungsverteilung zu erzielen und die Spannungen an Übergängen zu reduzieren, ist es insbesondere bevorzugt, die Form des Prüfkörpers durch ein integratives Simulationsverfahren zu optimieren.

Bei faserverstärkten Prüfkörpern wird hierzu zunächst die Orientierung der Fasern und der Bindenähte durch Simulation des Herstellungsprozesses des Prüfkörpers bestimmt. Neben der Orientierung der Fasern und der Bindenähte werden durch die Simulation des Herstellungsprozesses ebenfalls am Prozess beteiligte Größen wie die Druckverteilung und Temperatur, ermittelt. Im Allgemeinen ist die Orientierungsverteilungsdichte der Fasern im Prüfkörper inhomogen und hängt vom Herstellungsprozess ab. Für einen Spritzgießprozess wird die Orientierungsverteilungsdichte der Fasern mittels numerischer Integration aus der erweiterten Jeffery-Gleichung, wie sie z.B. in G.B. Jeffery, "The motion of ellipsoidal particles immersed in a viscous fluid", Proc. of the royal society of London, series A 1922, Seiten 161-179 beschrieben ist, aus den Daten der Simulation des Spritzgießprozesses berechnet. Hierbei erhält man für jeden Ort im Prüfkörper einen Faserorientierungstensor, aus dem eine Näherung für die Orientierungsverteilungsdichte folgt.

Zur Berechnung des Ausnutzungsgrades der Festigkeit des Prüfkörpers durch eine zweite Simulationsrechnung ist es erforderlich, das faserverstärkte Polymermaterial numerisch zu beschreiben. Die numerische Beschreibung erfolgt hierbei durch ein Materialgesetz, das auf einem viskoplastischen Ansatz für das Polymermaterial und auf einem elastischen Modell für die Fasern beruht, das mit einem mikromechanischen Modell zur Beschreibung des Werkstoffverbundes, d. h. des faserverstärkten Polymermaterials, kombiniert wird. Das Polymermaterial wird mit einem elastischplastischen Materialmodell beschrieben. Das plastische Potential enthält neben der allgemein üblichen ersten Invariante des Deviators des Spannungstensors auch einen Polynomansatz in der zweiten und der dritten Invariante. Die Fließregel ist nicht assoziiert formuliert. Das Potential enthält ebenfalls neben der ersten Invariante des Deviators auch Terme der zweiten und dritten Invariante. Die Viskosität wird formuliert, indem die Fließbedingung temporär verletzt werden kann. Die Rückprojektion auf die Fließfläche ist über einen viskosen Term zeitabhängig. Für dauerhafte Beanspruchung erreicht man die Lösung numerisch durch Iteration zu entsprechend langen Zeiten. Die Festigkeitshypothese für das Polymer beruht auf Versagensflächen, die ebenfalls neben der ersten Invariante auch die zweite und dritte Invariante des Spannungstensors enthalten. Die Dehnratenabhängigkeit geht in die Versagensbeschreibung über eine Gewichtung ein. Die Kalibrierung der Parameter des Modells erfolgt aus Zug-, Scher- und Druckversuchen.

Für das Fasermaterial wird elastisch sprödes Verhalten angesetzt. Parameter sind hierbei die Steifigkeit und die Bruchspannung des Fasermaterials.

Das mikromechanische Modell des Werkstoffverbundes beruht auf einem Homogenisierungsverfahren nach Mori-Tanaka, beschrieben in T. Mori und K. Tanaka, "Average stress in matrix and average elastic energy of materials with misfitting inclusions", Acta Metallurgica, Vol. 21, May 1973, Seiten 571 bis 574 und J.D. Eshelby,"The determination of the elastic field of an ellipsoidal inclusion, and related problems", Proc. of the Royal Society of London, Series A, 1957, Seiten 376 bis 396. Hier werden die Beiträge zum Materialverhalten der beiden Phasen, das heißt Polymer und Fasern, miteinander numerisch gewichtet. Als Parameter gelten hier der Fasergehalt, die Geometrie und die Orientierungsverteilungsdichte der Fasern.

Durch das Materialgesetz lässt sich die Anisotropie durch die im Polymer enthaltenen Fasern, die Nicht-Linearität und die Dehnraten-Abhängigkeit resultierend aus dem Polymerwerkstoff, das zu der bekannten Zug-/Druck-Asymmetrie führt, sowie das Versagensverhalten ermitteln. Versagen tritt auf, wenn die Polymermatrix versagt, die Fasern brechen oder sich die Matrix von den Fasern löst. Zudem lässt sich das Materialgesetz auf einfache Weise mit einer Simulation für den Prozess koppeln.

In einem zweiten Schritt wird der Ausnutzungsgrad der Festigkeit durch ein übliches numerisches Verfahren berechnet. Derartige numerische Verfahren sind im Allgemeinen Finite-Differenzen-Verfahren, Finite-Elemente-Verfahren und Finite-Volumen-Verfahren. Bevorzugt wird zur Berechnung des Ausnutzungsgrades der Festigkeit ein Finite-Elemente-Verfahren eingesetzt. Um die numerische Berechnung durchführen zu können, ist es notwendig, den Prüfkörper durch ein Gitternetz zu beschreiben. Hierzu wird die Kontur des Prüfkörpers in Form eines Gitternetzes abgebildet. Übliche Gitternetze, die in Finite-Elemente-Verfahren eingesetzt werden, sind Dreiecksgitter und Rechtecksgitter. Die Maschenweite des Gitters, d.h. der Abstand zwischen jeweils zwei miteinander verbundenen Punkten, wird so gewählt, dass eine hinreichend genaue Abbildung des Prüfkörpers durch das Gitternetz möglich ist. Komplexe Bereiche erfordern somit eine geringere Maschenweite, während in weniger komplexen Bereichen eine größere Maschenweite ausreichend ist. Da zur Festigkeitsberechnung nicht nur die Oberfläche des Prüfkörpers ausreichend ist, sondern auch die inneren Bereiche modelliert werden müssen, wird der gesamte Prüfkörper in Form eines räumlichen Gitternetzes abgebildet.

Zur Berechnung des Ausnutzungsgrades der Festigkeit werden die in der ersten Simulationsrechnung bestimmte Orientierung der Fasern im faserverstärkten Kunststoff und die Bindenähte auf das Gitternetz übertragen. Weitere Größen, die für die Berechnung des Ausnutzungsgrades der Festigkeit erforderlich sind, sind Stoffgrößen des Kunststoffes und der Fasern. Insbesondere relevante Stoffgrößen sind beispielsweise E-Modul, Poissonzahl, Parameter für das plastische Potential, Viskositätsparameter und Bruchfestigkeiten des Polymers, Fasergeometrie und Delaminationsfestigkeit sowie E-Modul, Poissonzahl und Zugfestigkeit der Fasern. Hierbei ist jeweils auch die Druck- und Temperaturabhängigkeit der einzelnen Stoffdaten zu berücksichtigen. Aus diesen Größen werden die festigkeitsrelevanten Kennwerte für das faserverstärkte Polymermaterial mittels des mikromechanischen Modells zur Beschreibung des Werkstoffverbundes berechnet.

Wenn kein faserverstärkter Kunststoff eingesetzt wird, so ist es selbstverständlich nicht erforderlich, zunächst eine Faserverteilung zu berechnen. In diesem Fall ist es ausreichend, den Ausnutzungsgrad der Festigkeit im zweiten Schritt durch das numerische Verfahren zu bestimmen.

Durch den so ermittelten Ausnutzungsgrad der Festigkeit kann dann die Form des Prüfkörpers optimiert werden, um ein gezieltes Versagen bei Einsatz des Prüfkörpers zu erzielen.

Die Erfindung betrifft weiterhin ein Verfahren zur Untersuchung der Stoffeigenschaften von Werkstoffen, insbesondere von Polymeren, unter Verwendung eines vorstehend beschriebenen Prüfkörpers, der aus dem zu untersuchenden Werkstoff hergestellt wird, das folgende Schritte umfasst:
(a) Verschließen des Prüfkörpers auf der dem Boden abgewandten Seite mit einem Deckel oder einem zweiten Prüfkörper;
(b) Anschließen einer Druck- und/oder Medienleitung an den Anschluss des Prüfkörpers;
(c) Beaufschlagen des Prüfkörpers mit Innendruck bis ein Versagen des Prüfkörpers eintritt und Erfassen des Drucks oder Beaufschlagen des Prüfkörpers mit einem vorgegebenen Druck und Erfassen der Zeit, bis ein Versagen des Prüfkörpers eintritt.

Durch das Verschließen des Prüfkörpers auf der dem gewölbten Boden abgewandten Seite mit einem Deckel oder einem zweiten Prüfkörper ist es möglich, den Prüfkörper von innen mit Druck zu beaufschlagen und so eine Belastung des Werkstoffs des Prüfkörpers zu erzielen. Der Deckel oder der zweite Prüfkörper kann dabei vollständig verschlossen sein oder einen weiteren Anschluss umfassen. Wenn der Deckel bzw. der zweite Prüfkörper einen weiteren Anschluss umfasst, so kann dieser mit einer Rücklaufleitung verbunden werden. Auf diese Weise ist es möglich, den Prüfkörper mit einem Medium zu durchströmen.

Wenn der Prüfkörper mit einem zweiten Prüfkörper verschlossen ist, so ist der zweite Prüfkörper vorzugsweise aus dem gleichen Material gefertigt wie der erste Prüfkörper. Wenn der Prüfkörper mit einem Deckel verschlossen ist, so kann der Deckel aus einem beliebigen Werkstoff gefertigt sein. Der Deckel kann z.B. aus dem gleichen Material gefertigt sein wie der Prüfkörper oder auch aus einem anderen Material. Alternativ zu einem Deckel aus einem Polymermaterial ist es auch möglich, z.B. einen Deckel aus einem Metall zu verwenden.

Das Verschließen des Prüfkörpers mit dem Deckel oder dem weiteren Prüfkörper kann lösbar, z.B. durch Verschrauben oder Verklemmen oder auch unlösbar beispielsweise durch Verkleben oder Schweißen erfolgen. Bei einem lösbaren Verbinden des Prüfkörpers mit dem Deckel oder einem weiteren Prüfkörper kann der Deckel oder der weitere Prüfkörper zur Untersuchung weiterer Prüfkörper wieder verwendet werden. Wenn der Deckel bzw. der zweite Prüfkörper unlösbar mit dem Prüfkörper verbunden ist, können diese im Allgemeinen nicht wieder verwendet werden.

Insbesondere beim Verschweißen des Prüfkörpers mit dem Deckel oder dem zweiten Prüfkörper ist es möglich, dass sich z.B. die Zusammensetzung des Polymermaterials oder die Orientierung der Fasern in der Schweißnaht ändert. Durch das Beaufschlagen des Prüfkörpers mit Druck kann so auch die Stabilität und der Einfluss der Schweißnaht auf die Festigkeit eines Bauteils untersucht werden.

Auch ist es möglich, z.B. den Einfluss unterschiedlicher Flanschformen zu untersuchen. Hierzu werden unterschiedliche Flanschformen am Hohlkörper ausgebildet. Der Flansch kann dabei jede beliebige, dem Fachmann bekannte Form annehmen.

Zur Ermittlung der zyklischen Festigkeit ist es vorteilhaft, den Innenraum des Prüfkörpers mit einem zyklischen Druck zu beaufschlagen und zu untersuchen, nach welcher Zeit ein Versagen des Prüfkörpers eintritt. Um hierbei die Versuchszeiten gegenüber herkömmlichen Untersuchungen zum Bauteilversagen bei zyklischer Belastung zu reduzieren, ist es z.B. möglich, den Prüfkörper auf ein niedrigeres Berstdruckniveau auszulegen als dies bei derzeit eingesetzten Prüfkörpern erfolgt. Auch können z.B. gezielte Schwächungen, z.B. durch Einbringen einer Kerbe in die Abflachung, vorgesehen sein. Als Kerbe kann dabei eine Kerbe mit je einem beliebigen Querschnitt eingebracht werden. So kann die Kerbe z.B. einen dreieckförmigen, rechteckförmigen, halbkreisförmigen oder beliebigen anderen Querschnitt aufweisen. Die Kerbe wird vorzugsweise im Bereich der Abflachung in den Prüfkörper eingebracht. Vorzugsweise verläuft die Kerbe in axialer Richtung. Jedoch ist es alternativ auch möglich, die Kerbe z.B. quer zur axialen Richtung auszubilden. Weiterhin ist es auch möglich, die Kerbe an der Innenseite oder alternativ an der Außenseite der Abflachung einzubringen.

Zur Untersuchung der Medienbeständigkeit des Prüfkörpers ist es z.B. möglich, neben dem Beaufschlagen mit Druck den Innenraum des Prüfkörpers mit einem flüssigen, gasförmigen oder viskosen Medium oder mit einem Feststoff zu befüllen. Vorzugsweise wird zusätzlich ein Druck aufgebracht. Hierzu ist es z.B. möglich, das Medium unter Druck in den Prüfkörper einzubringen.

Alternativ oder zusätzlich es weiterhin möglich, den Prüfkörper zur Untersuchung der Medienbeständigkeit z.B. in einem Behälter einzutauchen, der mit einem gasförmigen, flüssigen oder viskosen Medium oder mit einem Feststoff befüllt ist. Auf diese Weise ist es möglich, alternativ entweder ein Einwirken des Mediums auf der Innenseite des Prüfkörpers unter gleichzeitiger Druckbeanspruchung von innen oder ein Einwirken des Mediums an der Außenseite unter Druckbelastung oder alternativ auch ein Einwirken des Mediums auf der Innen- und Außenseite des Prüfkörpers zu untersuchen. Wenn sowohl der Innenraum des Prüfkörpers als auch die Außenfläche des Prüfkörpers dem Medium ausgesetzt wird, so ist es auch möglich, dass beispielsweise unterschiedliche Medien eingesetzt werden.

Das gasförmige, flüssige oder viskose Medium, das zur Untersuchung der Medienbeständigkeit eingesetzt wird, ist z.B. ein Öl, ein Fett, ein organisches oder anorganisches Reinigungsmittel oder Lösungsmittel, beispielsweise ein Glykol oder ein Kraftstoff, eine Salzlösung, eine Säure, eine Base, ein Halogen, ein organisches Gas, Wasserstoff, Sauerstoff oder Luft.

Der Prüfkörper kann alternativ entweder statisch oder dynamisch belastet werden. Für eine statische Belastung wird der Prüfkörper mit einem konstanten Druck beaufschlagt. Bei einer dynamischen Belastung erfolgt die Beaufschlagung mit einem sich zu vorgegebenen Intervallen ändernden Druck. Hierbei ist es einerseits möglich, dass der Druck jeweils nach einem vorgegebenen Zeitpunkt weiter zunimmt oder alternativ der Druck sich oszillatorisch ändert. Bei einer oszillatorischen Änderung des Drucks kann die Änderung z.B. sinusförmig, rechteckförmig oder dreieckförmig verlaufen. Auch jeder beliebig andere Druckverlauf ist denkbar. Weiterhin ist es auch möglich, dass einer oszillatorischen Druckänderung beispielsweise eine Druckzunahme überlagert ist. Auf diese Weise erhöht sich mit jeder Periode das erreichte Druckmaximum.

Neben der statischen oder dynamischen Druckbelastung ist es alternativ auch möglich, den Druck im Innenraum des Prüfkörpers allmählich zu erhöhen, bis der Prüfkörper versagt und auf diese Weise den maximalen Berstdruck zu ermitteln.

Zusätzlich oder alternativ zur Untersuchung der Medienbeständigkeit des Materials, aus dem der Prüfkörper gefertigt ist, ist es weiterhin bevorzugt, einen Temperatureinfluss auf den Prüfkörper zu untersuchen. Hierzu ist es insbesondere bevorzugt, das gasförmige, flüssige oder viskose Medium, mit dem der Prüfkörper befüllt ist und/oder das den Prüfkörper umgibt, zu temperieren. Hierbei ist es einerseits möglich, das gasförmige, flüssige oder viskose Medium zu erwärmen oder auf eine niedrigere Temperatur abzukühlen. So kann z.B. der Einsatz des Prüfkörpers bei niedrigen Temperaturen dazu führen, dass das Material spröde wird und dadurch schneller versagt. Ebenso ist es insbesondere bei thermoplastischen Polymeren möglich, dass bei hohen Temperaturen ein Versagen eintritt, da das Material zu stark erweicht.

Weiterhin ist es z.B. auch möglich, gezielt in den Prüfkörper eine Bindenaht einzubringen. Zum Einbringen der Bindenaht wird üblicherweise ein geeigneter Angusspunkt gewählt und falls erforderlich die Geometrie des Prüfkörpers angepasst. Auf diese Weise ist es z.B. möglich, den Einfluss einer Bindenaht auf die Festigkeit des Prüfkörpers zu untersuchen. Vorzugsweise wird der Angusspunkt in diesem Fall so positioniert, dass die Bindenaht im Bereich der Abflachung positioniert ist.

Insbesondere zur Verifizierung beispielsweise von Simulationsprogrammen ist es häufig erforderlich, auch den Einfluss der Geometrie des Prüfkörpers zu untersuchen. Hierzu ist es z.B. möglich, Prüfkörper in unterschiedlichen Längen oder mit unterschiedlichen Durchmessern des im Wesentlichen zylinderförmigen Hohlkörpers einzusetzen.

Insbesondere ist es z.B. bevorzugt, z.B. Prüfkörper mit variablen Gesamtlängen einzusetzen. Geeignete Gesamtlängen für den Prüfkörper liegen zum Beispiel im Bereich von 10 bis 150 mm. Der Außendurchmesser des im Wesentlichen zylindrischen Hohlkörpers liegt vorzugsweise im Bereich von 50 bis 120 mm, insbesondere im Bereich von 60 bis 100 mm. Weiterhin ist es bevorzugt, das Volumen des Innenraums des Prüfkörpers gering zu halten, um schnelle Versuchszeiten realisieren zu können. Bevorzugt ist das Volumen des Innenraums des Prüfkörpers kleiner als 1000 cm³, insbesondere kleiner als 750 cm³. Das heißt, dass bei zwei miteinander verbundenen Prüfkörpern das Volumen kleiner als 2000 cm³, insbesondere kleiner als 1500 cm³ ist.

Das vorstehend beschriebene Verfahren lässt sich neben der direkten Ermittlung von Festigkeitseigenschaften von Werkstoffen auch zur Verifizierung eines mathematischen Modells, das beispielsweise zur Auslegung von Bauteilen aus Polymermaterialien eingesetzt wird, verwenden.

Ausführungsbeispiele der Erfindung sind in den Zeichnungen dargestellt und werden in der nachfolgenden Beschreibung näher erläutert.

Es zeigen:
- Figur 1: einen Schnitt durch einen erfindungsgemäß ausgebildeten Prüfkörper,
- Figur 2: eine dreidimensionale Ansicht eines Prüfkörpers,
- Figur 3: eine dreidimensionale Ansicht von der Unterseite eines Prüfkörpers,
- Figur 4: zwei miteinander verbundene Prüfkörper mit einem Schweißflansch in einer ersten Ausführungsform,
- Figur 5: eine vergrößerte Darstellung eines Schweißflansches.

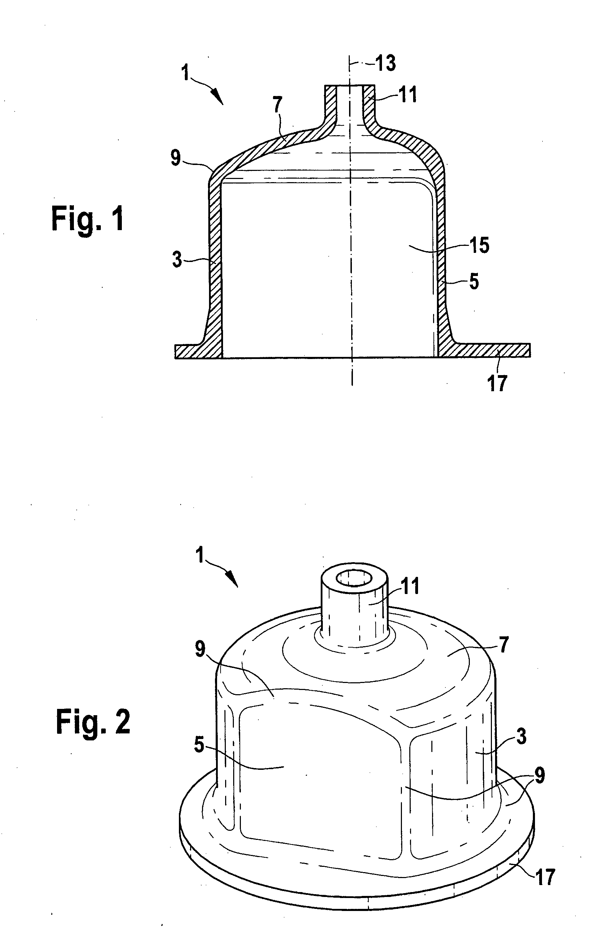

In Figur 1 ist eine Schnittdarstellung durch einen erfindungsgemäß ausgebildeten Prüfkörper dargestellt.

Ein Prüfkörper 1 umfasst einen im Wesentlichen zylinderförmig ausgebildeten Hohlkörper 3, der an einer Seite eine Abflachung 5 aufweist.

An einer Seite ist der zylinderförmige Hohlkörper 3 mit einem gewölbten Boden 7, wie er z.B. bei Druckbehältern eingesetzt wird, verschlossen. Der Übergang vom Hohlkörper 3 zum gewölbten Boden 7 ist in Form einer Rundung 9 ausgeführt, um zu vermeiden, dass eine Kante und damit eine Schwächung der Wandung entsteht.

Im gewölbten Boden 7 ist ein Anschluss 11 angeordnet, über den der Prüfkörper 1 mit einer Druck- und/oder Medienleitung verbindbar ist. In der hier dargestellten Ausführungsform ist der Anschluss 11 in Form eines Anschlussstutzens ausgebildet, über den z.B. ein Schlauch gesteckt werden kann, der mit einer Schelle befestigt wird. Neben der Ausführung des Anschlusses 11 als Stutzen ist es alternativ z.B. auch möglich, einen Anschluss 11 mit einem Außen- oder Innengewinde zu versehen, so dass die Druck- und/oder Medienleitung am Prüfkörper 1 angeschraubt werden kann. Der Anschluss 11 ist vorzugsweise entlang einer zentralen Achse 13 angeordnet, wobei die zentrale Achse 13 entlang der Mittellinie des zylinderförmigen Abschnitts des Hohlkörpers 3 ausgerichtet ist. Durch diese Positionierung des Anschlusses 11 lässt sich eine gleichmäßige Druckverteilung im Innenraum 15 des Prüfkörpers 1 erzielen. Weiterhin ist es z.B. bei einer Durchströmung des Prüfkörpers 1 auch möglich, durch diese Anordnung des Anschlusses 11 eine gleichmäßige Durchströmung zu realisieren.

An der dem gewölbten Boden 7 abgewandten Seite ist am Hohlkörper 3 ein Flansch 17 ausgebildet. Durch den Flansch 17 kann der Prüfkörper 1 an der dem gewölbten Boden 7 gegenüberliegenden Seite z.B. mit einem Deckel verschlossen werden. Alternativ ist es auch möglich, den Prüfkörper 1 z.B. mit einem zweiten Prüfkörper zu verschließen. Wenn der Prüfkörper 1 mit einem Deckel verschlossen wird, so ist es möglich, dass der Deckel eben ausgebildet ist oder ebenfalls in Form eines gewölbten Bodens, der mit einem Flansch entsprechend dem Flansch 17 am Hohlkörper 3 versehen ist.

In Figur 2 ist eine dreidimensionale Darstellung eines erfindungsgemäß ausgebildeten Prüfkörpers gezeigt.

Anhand der dreidimensionalen Darstellung ist erkennbar, dass der Prüfkörper 1 keine Kanten aufweist, die eine Schwächung darstellen könnten. Auf diese Weise wird eine gezielte Schwächung des Prüfkörpers 1 im Bereich der Abflachung 5 erzielt. Durch Druckbelastung des Prüfkörpers 1 erfolgt auf diese Weise ein gezieltes Versagen an der Abflachung 5. Die Übergänge sind jeweils durch Rundungen 9 ausgeführt. Auch der Übergang zum Flansch 17 ist als Rundung 9 ausgebildet. Hierdurch wird ebenfalls an dieser Stelle vermieden, dass eine ungewünschte Schwächung des Prüfkörpers 1 zu einem Versagen führen kann.

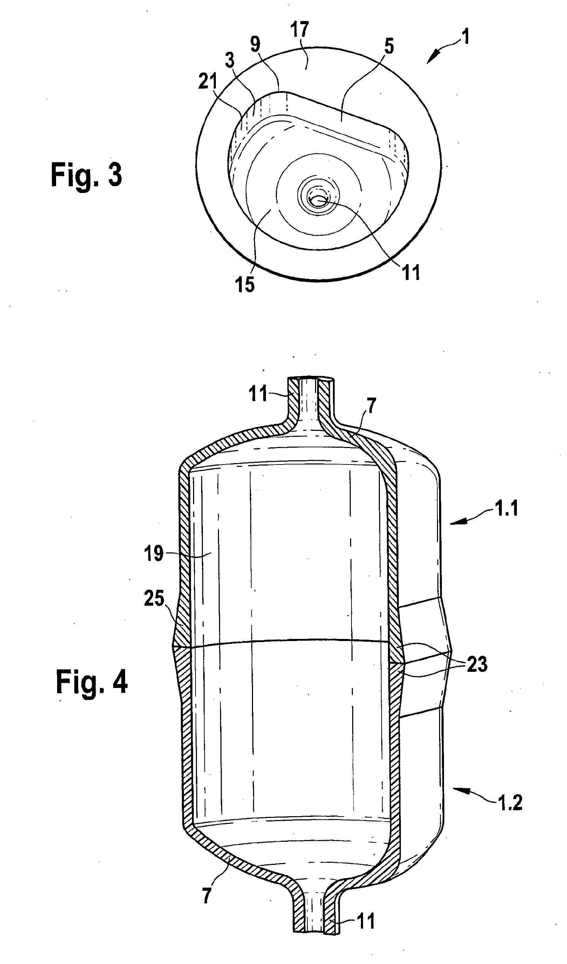

Figur 3 zeigt eine dreidimensionale Darstellung eines Prüfkörpers 1 von unten. Der Blick von unten auf den Prüfkörper 1 zeigt den Flansch 17 mit dem der Prüfkörper 1 mit einem Deckel oder einem weiteren Prüfkörper 1 verbunden werden kann, um den vom Hohlkörper 3 umschlossenen Innenraum 15 zu verschließen. Der so verschlossene Hohlraum 19 kann dann über den Anschluss 11 mit Druck beaufschlagt werden. In der hier dargestellten Ansicht des Prüfkörpers 1 von unten lässt sich erkennen, dass der Hohlkörper 3 einen im Wesentlichen zylinderförmigen Abschnitt 21 und die Abflachung 5 aufweist. Der Übergang vom im Wesentlichen zylinderförmigen Abschnitt 21 des Hohlkörpers 3 zur Abflachung 5 erfolgt über eine Rundung 9, um zu vermeiden, dass aufgrund einer Kante am Übergang eine zusätzliche Schwächung entsteht. Durch die Rundung 9 wird ein gleichmäßiger Übergang vom im Wesentlichen zylinderförmigen Abschnitt 21 zur Abflachung 5 realisiert.

Figur 4 zeigt eine dreidimensionale Schnittdarstellung zweier miteinander verbundener Prüfkörper.

Um zwei Prüfkörper 1.1 und 1.2 miteinander zu verbinden, ist an den Prüfkörpern 1.1, 1.2 jeweils auf der dem gewölbten Boden 7 gegenüberliegenden Seite ein Schweißflansch 23 ausgebildet. Am Schweißflansch 23 sind die zwei Prüfkörper 1.1, 1.2 miteinander verschweißt.

Im Unterschied zu dem in den Figuren 1 bis 3 dargestellten Flansch 17 ist der Schweißflansch 23, wie er in Figur 4 dargestellt ist, in Form einer Verdickung 25 ausgebildet. Durch die Verdickung 25 wird die Wandstärke erhöht, so dass eine etwas größere Fläche entsteht, an der die Prüfkörper 1.1 und 1.2 miteinander verbunden werden können. Um die zwei Prüfkörper 1.1 und 1.2 am Schweißflansch 23 miteinander zu verbinden, kann jedes beliebige, dem Fachmann bekannte und für Polymere geeignete Schweißverfahren verwendet werden. Auf diese Weise lässt sich die Stabilität der Schweißnaht in Abhängigkeit vom Schweißverfahren untersuchen. Beim Verbinden der Prüfkörper 1.1 und 1.2 ist darauf zu achten, dass die Prüfkörper 1.1 und 1.2 so ausgerichtet sind, dass die Abflachungen 5 einander gegenüberliegen, so dass eine dichte Verbindung der Prüfkörper 1.1, 1.2 erzielt wird. Über die Anschlüsse 11 der Prüfkörper 1.1 und 1.2 kann der von den Prüfkörpern 1.1 und 1.2 umschlossene Hohlraum 19 von einem Medium durchströmt werden oder mit Druck beaufschlagt werden. Im Allgemeinen wird das unter Druck stehende Medium durch den Anschluss 11 des ersten Prüfkörpers 1.1 zugeführt und über den zweiten Anschluss 11 des zweiten Prüfkörpers 1.2 wieder abgeführt. Selbstverständlich ist auch eine Strömung in entgegengesetzter Richtung möglich. Eine statische Belastung ist möglich, wenn beispielsweise der Anschluss 11 des einen Prüfkörpers 1.2 verschlossen wird und nur am ersten Prüfkörper 1.1 eine Druckleitung angeschlossen ist.

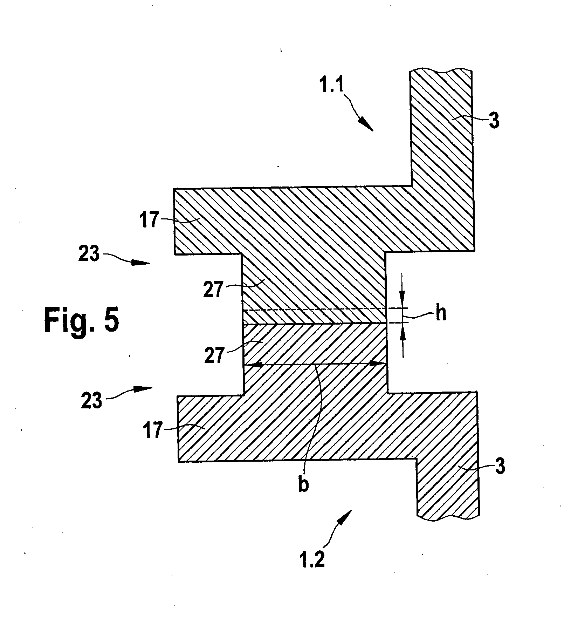

In Figur 5 ist eine Ausführungsform für einen Schweißflansch dargestellt. Hierbei weisen sowohl der Schweißflansch 23 des ersten Prüfkörpers 1.1 als auch der Schweißflansch 23 des zweiten Prüfkörpers 1.2 jeweils eine umlaufende Rippe 27 auf. Mit ihren jeweiligen umlaufenden Rippen 27 werden die Prüfkörper 1.1, 1.2 miteinander verbunden. Um einen Einfluss der Schweißnaht auf den eigentlichen Prüfkörper 1.1, 1.2 zu vermeiden, ist die umlaufende Rippe 27 versetzt zum Hohlkörper 3 angeordnet. Auch ist durch den Flansch 17, an dem die umlaufende Rippe 27 ausgebildet ist, die Gestaltung einer rotationssymmetrischen umlaufenden Rippe 27 möglich. Dies erlaubt zum Beispiel auch die Durchführung eines Reibschweißverfahrens.

Die Breite der Schweißnaht entspricht bei dem in Figur 5 dargestellten Schweißflansch 23 der Breite b der umlaufenden Rippe 27. Mit Bezugszeichen h ist der Abschmelzweg dargestellt.

Mit den in den Figuren 4 und 5 dargestellten durch eine Schweißnaht verbundenen Prüfkörpern 1.1, 1.2 lässt sich die Stabilität einer Schweißnaht untersuchen. Hierzu ist es vorteilhaft, wenn die Abflachung 5 in der gleichen Wandstärke ausgebildet ist wie der restliche Hohlkörper 3. Durch die konstante Wandstärke des gesamten Hohlkörpers 3 inklusive der Abflachung 5 wird die durch die Abflachung erzeugte Schwächung reduziert, so dass im Allgemeinen ein Versagen an der Schweißnaht erfolgt.

### Bezugszeichenliste

- 1.1: erster Prüfkörper
- 1.2: zweiter Prüfkörper
- 3: Hohlkörper
- 5: Abflachung
- 7: gewölbter Boden
- 9: Rundung
- 11: Anschluss
- 13: zentrale Achse
- 15: Innenraum
- 17: Flansch
- 19: Hohlraum
- 21: zylinderförmiger Abschnitt des Hohlkörpers 3
- 23: Schweißflansch
- 25: Verdickung
- 27: umlaufende Rippe

## Patentansprüche

1. Prüfkörper, insbesondere aus einem Polymermaterial, zur Untersuchung der Stoffeigenschaften für eine Bauteilauslegung, umfassend einen Hohlkörper (3), der einseitig mit einem gewölbten Boden (7) verschlossen ist und an der dem gewölbten Boden (7) gegenüberliegenden Seite mit einem Deckel oder einem zweiten Prüfkörper (1.2) verschließbar ist sowie einen Anschluss (11) umfasst, der mit einer Druck- und/oder Medienleitung verbindbar ist, **dadurch gekennzeichnet, dass** der Hohlkörper (3) im Wesentlichen zylinderförmig aufgebaut ist und an einer Seite eine Abflachung (5) aufweist, wobei die Abflachung einen ebenen Bereich umfasst und alle Übergänge zur Abflachung (5) mit einer Rundung (9) ausgebildet sind und keine Kanten aufweisen.

2. Prüfkörper gemäß Anspruch 1, **dadurch gekennzeichnet, dass** der Anschluss (11), der mit der Druck- und/oder Medienleitung verbindbar ist, am gewölbten Boden (7) des Prüfkörpers (1), bevorzugt entlang einer zentralen Achse (13) des im Wesentlichen zylinderförmig aufgebauten Hohlkörpers (3) angeordnet ist.

3. Prüfkörper gemäß Anspruch 1 oder 3, **dadurch gekennzeichnet, dass** am Hohlkörper (3) auf der dem gewölbten Boden (7) gegenüberliegenden Seite ein Flansch (17) oder eine Schweißkante (23) ausgebildet ist.

4. Prüfkörper gemäß einem der Ansprüche 1 bis 3, **dadurch gekennzeichnet, dass** der Prüfkörper (1) eine Wanddicke von weniger als 5 mm aufweist, wobei die Abflachung (5) vorzugsweise eine geringere Wandstärke aufweist als die übrigen Wandungen des Prüfkörpers (1).

5. Prüfkörper gemäß einem der Ansprüche 1 bis 4, **dadurch gekennzeichnet, dass** die Form des Prüfkörpers (1) durch ein integratives Simulationsverfahren optimiert ist.

6. Verfahren zur Untersuchung der Stoffeigenschaften von Werkstoffen, insbesondere Polymeren, unter Verwendung eines Prüfkörpers (1) gemäß einem der Ansprüche 1 bis 5, der aus dem zu untersuchenden Werkstoff hergestellt wird, folgende Schritte umfassend:
(a) Verschließen der Prüfkörpers (1; 1.1) auf der dem gewölbten Boden (7) abgewandten Seite mit einem Deckel oder einem zweiten Prüfkörper (1.2);
(b) Anschließen einer Druck- und/oder Medienleitung an den Anschluss (11) des Prüfkörpers (1; 1.1, 1.2);
(c) Beaufschlagen des Prüfkörpers (1; 1.1, 1.2) mit Innendruck bis ein Versaggen des Prüfkörpers (1; 1.1, 1.2) eintritt und Erfassen des Drucks oder Beaufschlagen des Prüfkörpers (1; 1.1, 1.2) mit einem vorgegebenen Druck und Erfassen der Zeit, bis ein Versagen des Prüfkörpers (1; 1.1, 1.2) eintritt.

7. Verfahren gemäß Anspruch 6, **dadurch gekennzeichnet, dass** der Prüfkörper (1; 1.1) mit dem Deckel oder dem weiteren Prüfkörper (1.2) lösbar durch Verschrauben oder Verklemmen oder unlösbar durch Verkleben oder Schweißen verbunden wird.

8. Verfahren gemäß Anspruch 6 oder 7, **dadurch gekennzeichnet, dass** der Prüfkörper (1; 1.1, 1.2) zur Untersuchung der Medienbeständigkeit mit einem unter Druck stehenden flüssigen, gasförmigen oder viskosen Medium oder mit einem Feststoff befüllt wird und oder in einen Behälter eingetaucht ist, der mit einem gasförmigen, flüssigen oder viskosen Medium oder mit einem Feststoff befüllt ist.

9. Verfahren gemäß Anspruch 8, **dadurch gekennzeichnet, dass** das gasförmige, flüssige oder viskose Medium ein Öl, ein Fett, ein organisches oder anorganisches Reinigungsmittel oder Lösungsmittel, eine Salzlösung, eine Säure, eine Base, ein Halogen, ein organisches Gas, Wasserstoff, Sauerstoff oder Luft ist, wobei das Medium, mit dem der Prüfkörper (1; 1.1, 1.2) befüllt ist und das Medium, in das der Prüfkörper (1; 1.1, 1.2) eingetaucht ist unterschiedlich sein können.

10. Verfahren gemäß Anspruch 8, **dadurch gekennzeichnet, dass** der Feststoff ein Salz ist.

11. Verfahren gemäß einem der Ansprüche 6 bis 10, **dadurch gekennzeichnet, dass** der vorgegebene Druck, mit dem der Prüfkörper (1; 1.1, 1.2) beaufschlagt wird, ein konstanter Druck oder ein sich zu vorgegebenen Intervallen ändernder Druck ist.

12. Verfahren gemäß einem der Ansprüche 6 bis 11, **dadurch gekennzeichnet, dass** das gasförmige, flüssige oder viskose Medium, mit dem der Prüfkörper (1; 1.1, 1.2) befüllt ist und/oder das den Prüfkörper (1; 1.1, 1.2) umgibt, temperiert ist.

13. Verfahren gemäß einem der Ansprüche 6 bis 12, **dadurch gekennzeichnet, dass** zur Untersuchung des Einflusses einer Bindenaht Prüfkörper (1; 1.1, 1.2) eingesetzt werden; die unterschiedliche Anspritzpunkte aufweisen.

14. Verfahren gemäß einem der Ansprüche 6 bis 13, **dadurch gekennzeichnet, dass** zur Untersuchung des Einflusses der Geometrie Prüfkörper (1; 1.1, 1.2) in unterschiedlichen Längen oder mit einem unterschiedlichen Durchmesser des im Wesentlichen zylinderförmigen Hohlkörpers (3) eingesetzt werden.

15. Verfahren gemäß einem der Ansprüche 6 bis 14 zur Verifizierung eines mathematischen Modells, das zur Auslegung von Bauteilen aus Polymermaterialien eingesetzt wird.

## Claims

1. A test specimen, in particular composed of a polymer material, for studying the properties of a material for component design, comprising a hollow body (3), which has been sealed on one side by a curved base (7), and which, on the side opposite to the curved base (7), is sealable by a cover or by a second test specimen (1.2), and which also comprises a connection (11), which is connectable to a pressure line and/or fluid line, wherein the hollow body (3) is of essentially cylindrical structure and has a flattened area (5) on one side, where the flattened area comprises a flat region, and all of the transitions to the flattened area (5) have been formed with a rounded area (9), and do not have sharp edges.

2. The test specimen according to claim 1, wherein the connection (11), which is connectable to the pressure line and/or fluid line, has been arranged at the curved base (7) of the test specimen (1), preferably along a central axis (13) of the hollow body (3) of essentially cylindrical structure.

3. The test specimen according to claim 1 or 3, wherein a flange (17) or an edge suitable for welding (23) has been formed on the hollow body (3) on the side opposite to the curved base (7).

4. The test specimen according to any of claims 1 to 3, wherein the wall thickness of the test specimen (1) is less than 5 mm, and where the wall thickness of the flattened area (5) is preferably smaller than that of the other wall areas of the test specimen (1).

5. The test specimen according to any of claims 1 to 4, wherein the shape of the test specimen (1) has been optimized via an integrative simulation method.

6. A method for studying the properties of materials, in particular of polymers, using a test specimen (1) according to any of claims 1 to 5, which has been produced from the material to be studied, comprising the following steps:
(a) sealing of the test specimen (1; 1.1) on the side facing away from the curved base (7), by a cover or by a second test specimen (1.2);
(b) connection of a pressure line and/or fluid line to the connection (11) of the test specimen (1; 1.1, 1.2);
(c) applying internal pressure to the test specimen (1; 1.1, 1.2) until the test specimen (1; 1.1, 1.2) fails, and recording the pressure, or applying a prescribed pressure to the test specimen (1; 1.1, 1.2), and recording the time-to-failure of the test specimen (1; 1.1, 1.2).

7. The method according to claim 6, wherein the connection of the test specimen (1; 1.1) to the cover or to the further test specimen (1.2) is generated releasably via screwing or clamping, or non-releasably via adhesive-bonding or welding.

8. The method according to claim 6 or 7, wherein, in order to study chemicals resistance, a pressurized liquid, gaseous, or viscous fluid, or a solid, is charged to the test specimen (1; 1.1, 1.2) and/or the test specimen (1; 1.1, 1.2) has been immersed in a container to which a gaseous, liquid, or viscous fluid, or a solid, has been charged.

9. The method according to claim 8, wherein the gaseous, liquid, or viscous fluid is an oil, a fat, an organic or inorganic cleaning agent, or solvent, a salt solution, an acid, a base, a halogen, an organic gas, hydrogen, oxygen, or air, where the fluid which has been charged to the test specimen (1; 1.1, 1.2) and the fluid into which the test specimen (1; 1.1, 1.2) has been immersed can be different.

10. The method according to claim 8, wherein the solid is a salt.

11. The method according to any of claims 6 to 10, wherein the prescribed pressure which is applied to the test specimen (1; 1.1, 1.2) is a constant pressure or a pressure changing at prescribed intervals.

12. The method according to any of claims 6 to 11, wherein the temperature of the gaseous, liquid, or viscous fluid which has been charged to the test specimen (1; 1.1, 1.2) and/or which surrounds the test specimen (1; 1.1, 1.2) has been controlled.

13. The method according to any of claims 6 to 12, wherein, in order to study the effect of a weld line, test specimens (1; 1.1, 1.2) are used which have different injection points.

14. The method according to any of claims 6 to 13, wherein, in order to study the effect of geometry, test specimens (1; 1.1, 1.2) are used with different lengths or with a different diameter of the essentially cylindrical hollow body (3).

15. The method according to any of claims 6 to 14 for verifying a mathematical model which is used for the design of components composed of polymer materials.

## Revendications

1. Éprouvette, notamment en un matériau polymère, pour l'analyse des propriétés d'un matériau pour la conception d'un composant, comprenant un corps creux (3), qui est fermé d'un côté avec un fond bombé (7) et qui peut être fermé du côté opposé au fond bombé (7) avec un couvercle ou une seconde éprouvette (1.2), et qui comprend un raccord (11) qui peut être connecté avec une conduite de pression et/ou de milieu, **caractérisée en ce que** le corps creux (3) est construit sous forme essentiellement cylindrique et comprend un aplatissement (5) sur un côté, l'aplatissement comprenant une zone plane et toutes les transitions de l'aplatissement (5) étant formées avec un arrondi (9) et ne présentant aucune arête.

2. Éprouvette selon la revendication 1, **caractérisée en ce que** le raccord (11), qui peut être connecté avec la conduite de pression et/ou de milieu, est agencé au niveau du fond bombé (7) de l'éprouvette (1), de préférence le long d'un axe central (13) du corps creux (3) construit sous forme essentiellement cylindrique.

3. Éprouvette selon la revendication 1 ou 3, **caractérisée en ce qu'**une bride (17) ou un bord à souder (23) est formé sur le corps creux (3) sur le côté opposé au fond bombé (7).

4. Éprouvette selon l'une quelconque des revendications 1 à 3, **caractérisée en ce que** l'éprouvette (1) présente une épaisseur de paroi de moins de 5 mm, l'aplatissement (5) présentant de préférence une épaisseur de paroi plus faible que les autres parois de l'éprouvette (1).

5. Éprouvette selon l'une quelconque des revendications 1 à 4, **caractérisée en ce que** la forme de l'éprouvette (1) est optimisée par un procédé de simulation intégratif.

6. Procédé d'analyse des propriétés de matériaux, notamment de polymères, utilisant une éprouvette (1) selon l'une quelconque des revendications 1 à 5, qui est fabriquée à partir du matériau à analyser, comprenant les étapes suivantes :
(a) la fermeture de l'éprouvette (1 ; 1.1) du côté opposé au fond bombé (7) avec un couvercle ou une seconde éprouvette (1.2) ;
(b) le raccordement d'une conduite de pression et/ou de milieu au raccord (11) de l'éprouvette (1 ; 1.1, 1.2) ;
(c) l'exposition de l'éprouvette (1 ; 1.1, 1.2) à une pression intérieure jusqu'à ce qu'une défaillance de l'éprouvette (1 ; 1.1, 1.2) se produise et l'enregistrement de la pression ou l'exposition de l'éprouvette (1 ; 1.1, 1.2) à une pression prédéterminée et l'enregistrement du temps jusqu'à ce qu'une défaillance de l'éprouvette (1 ; 1.1, 1.2) se produise.

7. Procédé selon la revendication 6, **caractérisé en ce que** l'éprouvette (1 ; 1.1) est reliée avec le couvercle ou l'autre éprouvette (1.2) de manière détachable par vissage ou serrage ou de manière non détachable par collage ou soudage.

8. Procédé selon la revendication 6 ou 7, **caractérisé en ce que**, pour analyser la résistance à un milieu, l'éprouvette (1 ; 1.1, 1.2) est remplie avec un milieu liquide, gazeux ou visqueux sous pression ou avec un solide ou immergée dans un contenant qui est rempli avec un milieu gazeux, liquide ou visqueux ou avec un solide.

9. Procédé selon la revendication 8, **caractérisé en ce que** le milieu gazeux, liquide ou visqueux est une huile, une graisse, un détergent ou un solvant organique ou inorganique, une solution saline, un acide, une base, un halogène, un gaz organique, l'hydrogène, l'oxygène ou l'air, le milieu avec lequel l'éprouvette (1 ; 1.1, 1.2) est remplie et le milieu dans lequel l'éprouvette (1 ; 1.1, 1.2) est immergée pouvant être différents.

10. Procédé selon la revendication 8, **caractérisé en ce que** le solide est un sel.

11. Procédé selon l'une quelconque des revendications 6 à 10, **caractérisé en ce que** la pression prédéterminée à laquelle l'éprouvette (1 ; 1.1, 1.2) est exposée est une pression constante ou une pression variant à des intervalles prédéterminés.

12. Procédé selon l'une quelconque des revendications 6 à 11, **caractérisé en ce que** le milieu gazeux, liquide ou visqueux avec lequel l'éprouvette (1 ; 1.1, 1.2) est remplie et/ou qui entoure l'éprouvette (1 ; 1.1, 1.2) est tempéré.

13. Procédé selon l'une quelconque des revendications 6 à 12, **caractérisé en ce que**, pour l'analyse de l'effet d'une ligne de soudure, des éprouvettes (1 ; 1.1, 1.2) qui présentent différents points d'injection sont utilisées.

14. Procédé selon l'une quelconque des revendications 6 à 13, **caractérisé en ce que**, pour l'analyse de l'effet de la géométrie, des éprouvettes (1 ; 1.1, 1.2) présentant différentes longueurs ou un diamètre différent du corps creux essentiellement cylindrique (3) sont utilisées.

15. Procédé selon l'une quelconque des revendications 6 à 14, pour la vérification d'un modèle mathématique qui est utilisé pour la conception de composants à partir de matériaux polymères.
